# FASCICULE DE BREVET EUROPEEN

(11) **EP 2 596 578 B1**
(45) Date de publication et mention de la délivrance du brevet: **14.05.2014**
(21) Numéro de dépôt: 11741479.7
(22) Date de dépôt: 29.06.2011
(51) Int. Cl.: H02P 6/00, H01R 39/58

(54) **PROCEDE ET DISPOSITIF DE SURVEILLANCE DE L'USURE DE CONTACTS ELECTRIQUES FROTTANTS D'UN COLLECTEUR DE COURANT ROTATIF POUR VEHICULE AUTOMOBILE**
VERFAHREN UND VORRICHTUNG ZUR ÜBERWACHUNG DES VERSCHLEISSES VON ELEKTRISCHEN GLEITKONTAKTEN EINES ROTIERENDEN GLEICHRICHTERS FÜR EIN KRAFTFAHRZEUG
METHOD AND DEVICE FOR MONITORING THE WEAR OF SLIDING ELECTRICAL CONTACTS OF A ROTATING COMMUTATOR FOR AN AUTOMOTIVE VEHICLE

(30) Priorité: 22.07.2010 FR 1056011
(43) Date de publication de la demande: 29.05.2013
(73) Titulaire: Peugeot Citroën Automobiles SA, 78140 Vélizy Villacoublay (FR)
(72) Inventeur: HAMMAT, Samy, F-91700 Sainte-Genevieve Des Bois (FR); BESSEGHAIR, Mehdi, F-75020 Paris (FR)
(86) Numéro de dépôt international: PCT/FR2011/051513
(87) Numéro de publication internationale: WO 2012/010763

(56) Documents cités:
- WO-A1-96/07232
- DE-C1- 4 137 384
- FR-A1- 2 751 416
- GB-A- 889 971

## Description

La présente invention revendique la priorité de la demande française 1056011 déposée le 22 Juillet 2010 dont le contenu (texte, dessin et revendications) est ici incorporé par référence.

L'invention est du domaine des collecteurs de courant rotatifs exploitant des contacts électriques frottants et équipant un générateur de courant électrique, notamment d'un véhicule automobile. Plus particulièrement l'invention relève du domaine des procédés et dispositifs associés à un tel collecteur de courant pour surveiller l'état d'usure des contacts électriques frottants, tels qu'agencés en balais ou organes analogues coopérants avec une piste conductrice.

Les véhicules automobiles sont équipés de machines électriques tournantes, tels que des alternateurs ou des alternateurs réversibles, qui associent un rotor monté tournant à l'intérieur d'un stator. De telles machines électriques sont notamment exploitées pour le démarrage d'un moteur thermique, pour l'alimentation en énergie du réseau de bord électrique et/ou pour le rechargement d'une réserve d'énergie embarquée qui équipent le véhicule. Pour réaliser ces différents modes de fonctionnement, ces machines électriques génèrent un courant induit au sein du rotor, qui est exploité à partir d'un collecteur de courant rotatif comprenant des contacts électriques frottants, tels qu'agencés en balais ou organes analogues, coopérant avec des pistes conductrices respectives. Cependant, le frottement des balais le long des pistes induit leur usure, avec pour conséquence une perte significative du contact électrique au sein du bobinage rotorique. L'usure des balais est susceptible de rendre inexploitable la machine électrique en mode de production de courant, avec pour conséquence d'induire une détérioration du collecteur de courant, de rendre impossible un rechargement de la réserve d'énergie et une alimentation en énergie du réseau de bord du véhicule, voire encore de rendre impossible une exploitation de la machine électrique en tant que source d'une énergie mécanique.

Pour éviter d'induire une panne du véhicule, il a été proposé de surveiller l'usure des contacts électriques frottants en cours de fonctionnement de la machine électrique. On pourra par exemple se reporter au document FR2751416 (EUROCOPTER SA), dans lequel il est proposé de mesurer la résistance du contact électrique entre les balais et les pistes équipant le collecteur rotatif. Une telle mesure est réalisée en prenant en compte le rapport entre les variations de tensions aux bornes des balais et les variations d'intensité qui traversent les balais.

Le but de la présente invention est de proposer un procédé et un dispositif de surveillance de l'usure de contacts électriques frottants d'un collecteur de courant rotatif pour véhicule automobile, permettant de détecter de manière fiable et appropriée une usure des contacts électriques frottants, et d'anticiper leur remplacement avant d'induire des conséquences préjudiciables pour le fonctionnement correct du véhicule et des accessoires dont il est équipé.

Le procédé de la présente invention est un procédé de surveillance de l'usure de contacts électriques frottants d'un collecteur de courant rotatif. Un tel collecteur de courant équipe une machine électrique génératrice de ce courant, telle qu'un alternateur ou un alternateur réversible embarqué sur un véhicule automobile. La machine électrique est du type associant un stator et un rotor qui est relié à des contacts électriques frottants le long de pistes qui leurs sont affectées, pour procurer une continuité du courant collecté et distribué. Les contacts électriques frottants sont notamment agencés en balais dont les brins sont issus d'un matériau conducteur, tel que le carbone ou un alliage métallique par exemple, et sont montés sur le collecteur de courant en contact avec au moins une dite piste conductrice respective. Le procédé de l'invention consiste dans sa généralité à analyser le courant généré par la machine électrique pour en déduire un état d'usure des contacts électriques frottants.

Selon la présente invention, un tel procédé est principalement reconnaissable en ce qu'il comprend les opérations consistant à :
*) détecter à partir de la machine électrique en phase de génération de courant des données relatives au Rapport Cyclique d'Ouverture (RCO) induit par le courant généré. Le RCO correspond à une valeur déterminée à partir du rapport entre le courant rotorique instantané (I.rot) et le courant rotorique maximal (I.rot.max), dit de saturation. Un tel RCO correspondant à (I.rot.max) / (I.rot) est variable selon les conditions extérieures.
*) comparer les données relatives au dit RCO détecté avec au moins un seuil de RCO toléré prédéterminé comprenant au moins une valeur de seuil de RCO. Une telle comparaison consiste notamment à confronter le RCO détecté et le seuil de RCO toléré qui est préalablement mémorisé, et est suivie d'une opération de déduction d'un état d'usure des contacts électriques frottants au regard du seuil de RCO toléré. Accessoirement, une opération intermédiaire de filtrage des signaux relatifs au courant permet de simplifier les dites opérations de comparaison et de déduction. L'état maximal d'usure toléré des contacts électriques frottants est par exemple déduit à partir d'une valeur de RCO détectée de l'ordre supérieure à un seuil toléré de 50%, pendant une durée de l'ordre de plusieurs dizaines de secondes. Un affaiblissement des contacts électriques frottants tend à rendre nulle la valeur du courant rotorique généré par la machine électrique, et le RCO fourni par la machine électrique tend inversement à être élevé pour maintenir une régulation de l'énergie délivrée.

Les dites opérations de détection des données relatives au RCO, de comparaison des données de RCO détectée et de déduction de l'état d'usure des contacts électriques frottants sont comprises dans un processus itératif de surveillance de l'état d'usure des contacts électriques frottants lorsque la machine électrique est en mode de génération du courant.
*) générer une information d'alerte à partir de l'opération de déduction, dans le cas où l'état d'usure des contacts électriques frottants est atteint. La génération de l'information d'alerte consiste par exemple à activer un ou plusieurs voyants ou organes analogues que comporte un tableau de bord du véhicule et/ou un indicateur électronique intégré dans un ordinateur de bord de ce véhicule. Cette information d'alerte est inhibée après remplacement des contacts électriques frottants.

Selon une forme avantageuse de réalisation, l'opération de déduction consiste à incrémenter un compteur cadencé sur une période prédéterminée, en fonction d'informations issues de l'opération de comparaison. Ladite période prédéterminée de cadence du compteur est à titre indicatif de l'ordre comprise entre 50 ms et 120 ms, et idéalement est de l'ordre de 80 ms.

L'opération d'incrémentation consiste plus particulièrement à faire varier le compteur cadencé soit suivant une valeur croissante dans le cas où ladite comparaison génère une information selon laquelle la valeur du RCO détectée est supérieure à la valeur du seuil de RCO toléré, soit suivant une valeur décroissante dans le cas où ladite comparaison génère une information selon laquelle la valeur du RCO détecté est inférieure à ladite valeur de seuil de RCO toléré. L'opération de génération de ladite information d'alerte est notamment provoquée à partir d'une comparaison entre la valeur d'incrémentation du compteur cadencé et une valeur d'incrémentation de consigne prédéterminée à partir de laquelle l'information d'alerte est générée.

Au moins l'opération d'incrémentation du compteur cadencé est interrompue en l'absence de génération d'un courant par la machine électrique. De préférence, l'ensemble des opérations relatives au dit processus itératif sont interrompues à partir d'une détection d'une absence de génération d'un courant par la machine électrique.

L'opération d'inhibition de ladite information d'alerte est de préférence provoquée à partir d'une incrémentation du compteur cadencé à une valeur nulle induite par la comparaison entre la valeur du RCO détectée et la valeur du seuil de RCO toléré. Plus particulièrement, l'installation de contacts électriques frottants neufs induit une décrémentation du compteur cadencé vers une valeur nulle, à partir de laquelle l'inhibition de l'information d'alerte est provoquée.

Selon diverses variantes, l'opération d'inhibition est aussi susceptible d'être provoquée indifféremment à partir d'une mesure du courant généré par la machine électrique et/ou à partir d'une opération de validation volontaire par un opérateur.

La présente invention a aussi pour objet un dispositif générateur d'un courant électrique pour véhicule automobile apte à mettre en oeuvre le procédé décrit. Un tel dispositif comprend dans sa généralité une machine électrique génératrice de ce courant, un collecteur de courant équipé de contacts électriques frottants, et des moyens de surveillance de l'usure des dits contacts électriques frottants. De tels moyens de surveillance sont notamment des moyens électroniques mettant en oeuvre une analyse du courant généré par la machine électrique. Selon la présente invention, un tel dispositif est principalement reconnaissable en ce que lesdits moyens de surveillance comprennent :
*) des moyens de détection du fonctionnement de la machine électrique en mode de génération de courant. De tels moyens de détection sont destinés à activer la mise en oeuvre du processus itératif de surveillance des contacts électriques frottants lorsque la machine électrique génère du courant, et d'interrompre ce processus itératif dans le cas contraire.
*) des moyens de détection et/ou de mesure de données relatives au RCO induit par le courant généré par la machine électrique. La mise en oeuvre de ces moyens de détection et de mesure est placée sous la dépendance des moyens de détection du fonctionnement de la machine électrique, pour activer leur mise en oeuvre seulement lorsque la machine électrique produit du courant.

*) des moyens de calcul associant des moyens de comparaison entre les dites données détectées et des données de consigne prédéterminées stockées dans des moyens de mémoire, avec des moyens de déduction d'un état d'usure des contacts électriques frottants au-delà d'un seuil d'usure toléré. De tels moyens de calcul et moyens de mémoire sont notamment intégrés dans un ordinateur de bord du type équipant les véhicules automobiles. Les moyens de calcul comprennent avantageusement un dit compteur cadencé associé à des moyens de variation de son incrémentation, dont la mise en oeuvre est placée sous la dépendance des moyens de comparaison.
*) des moyens générateurs d'une dite information d'alerte, qui sont associés à des moyens de communication de l'information d'alerte générée. Selon divers exemples de réalisation, pris isolément ou en combinaison, les moyens de communication de l'information d'alerte sont indifféremment des moyens visuels intégrés à un tableau de bord d'un véhicule équipé du dispositif et/ou des moyens électroniques intégrés dans un module électronique de gestion de panne que comprend un ordinateur de bord de ce véhicule. De tels moyens électroniques permettent au cours d'une opération de maintenance du véhicule, d'alerter en atelier un opérateur d'avoir à remplacer les contacts électriques frottants en cas d'usure révélée au-delà du dit seuil prédéterminé.
*) des moyens d'inhibition des moyens générateurs de l'information d'alerte, voire aussi des moyens de communication préalablement activés, dont la mise en oeuvre est de préférence placée sous la dépendance du compteur cadencé. Accessoirement, le dispositif comporte un organe de commande volontaire par l'opérateur des dits moyens d'inhibition, activable par l'opérateur après remplacement des contacts électriques frottants. D'autres moyens de détection d'un tel remplacement sont susceptibles d'être exploités pour activer les moyens d'inhibition.

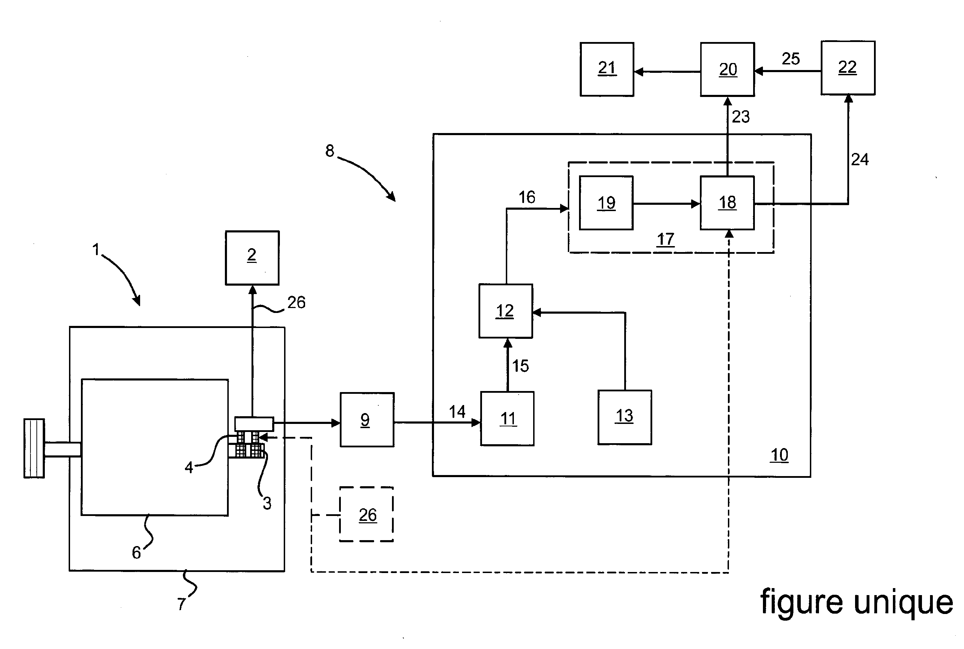

Un exemple de réalisation de la présente invention va être décrit en relation avec la figure unique de la planche annexée, qui illustre un dispositif et ses modalités de mise en oeuvre pour la surveillance de l'usure de contacts électriques frottants d'un collecteur de courant rotatif équipant une machine électrique génératrice de ce courant pour véhicule automobile.

Sur la figure unique, une machine électrique 1 génératrice de courant est agencée pour être montée sur un véhicule automobile en vue d'alimenter en énergie des équipements 2 de ce véhicule, notamment une réserve d'énergie rechargeable et des accessoires alimentés en énergie par l'intermédiaire d'un réseau de bord qui est en relation avec la machine électrique et/ou avec la réserve d'énergie rechargeable. La machine électrique 1 est équipée d'un collecteur de courant rotatif 3 comprenant des contacts électriques frottants 4, tels qu'agencés en balais ou analogues, qui coopèrent avec des pistes respectives 5 pour relier électriquement un rotor 6 à un circuit d'alimentation 26 des équipements 2 du véhicule. Pour éviter qu'une usure significative des contacts électriques frottants 4 ne porte préjudice aux équipements du véhicule, la machine électrique 1 et plus particulièrement le collecteur de courant rotatif 3, est en relation avec des moyens de surveillance 8 de l'usure des contacts électriques frottants 4 à partir d'une analyse du courant généré par la machine électrique 1.

Il est plus particulièrement proposé d'analyser les informations relatives au courant généré par la machine électrique 1 à partir du collecteur de courant rotatif 3. Une telle analyse porte sur des données relatives au RCO induit par le courant généré par la machine électrique 1. Il est proposé de vérifier itérativement ces données de RCO qui sont collectées en continu, pour déterminer leur caractère anormal. Un tel caractère anormal des données de RCO détectées et/ou mesurées est fondé sur le constat qu'un affaiblissement des contacts électriques frottants 4 tend à rendre nulle la valeur du courant rotorique généré par la machine électrique 1 et que le RCO fourni par la machine électrique 1 tend inversement à être élevé pour maintenir une régulation de l'énergie délivrée. Dans le cas ou les données de RCO sont considérées comme anormale au regard d'un seuil prédéterminé, une information relative à un défaut d'usure des contacts électriques frottants 4 est validée. Dans le cas contraire, le processus engagé de surveillance de l'usure des contacts électriques frottants 4 est poursuivi par itération. En cas d'un défaut d'usure constaté, une information d'alerte est générée et des moyens de communication de cette alerte sont activés, tel qu'un voyant d'avertissement du conducteur ou tel que des moyens électroniques accessibles en atelier par un opérateur par l'intermédiaire de l'ordinateur de bord du véhicule. Lorsque les contacts électriques frottants 4 usés sont remplacés par de nouveaux contacts électriques frottants 4 neufs ou de qualité satisfaisante, la génération de l'information d'alerte et les moyens dédiés de communication sont inhibés.

Plus particulièrement, les moyens de surveillance 8 comprennent des moyens de détection 9 de la génération de courant par la machine électrique 1, pour initier un processus itératif de surveillance de l'usure des contacts électriques frottants. Dans le cas où la machine électrique ne génère pas de courant, le processus itératif de surveillance est interrompu sans pour autant que les informations préalablement collectées et/ou générées par les moyens de surveillance 8 ne soient effacées. Le dispositif de surveillance comprend des moyens de calcul 10 pour générer des informations permettant de détecter une usure significative des contacts électriques frottants 4, et les dites informations générées sont conservées entre deux phases de génération de courant par la machine électrique 1. La mise en oeuvre des moyens de calcul 10 est placée sous la dépendance des moyens de détection 9 de la génération de courant par la machine électrique 1.

Les moyens de calcul 10 comprennent des moyens de détection et/ou de mesure 11 de données relatives au RCO induit par le courant généré par la machine électrique 1, qui sont en relation avec des moyens de comparaison 12 entre ces données de RCO détectées et/ou mesurées et des données de RCO de consigne préalablement stockées dans des moyens de mémoire 13. De telles données de RCO de consigne correspondent à un seuil de RCO toléré correspondant à un seuil d'usure des contacts électriques frottants 4 procurant une continuité de courant insatisfaisante entre les pistes 5 et les contacts électriques frottants 4 qui leurs sont affectés. Une opération 14 de détection et/ou de mesure du RCO induit par le courant généré par la machine électrique 1 est suivie d'une opération de comparaison 15 de la une valeur du RCO détectée et/ou mesurée avec une valeur de RCO de consigne, puis d'une opération 16 de déduction de l'état d'usure des contacts électriques frottants 4 au-delà d'un seuil d'usure toléré. Des moyens de déduction 17 mettent en oeuvre un compteur cadencé 18 pour effectuer une telle opération 16 de déduction, par l'intermédiaire de moyens de variation 19 de l'incrémentation du compteur cadencé 18 dont la mise en oeuvre est placée sous la dépendance des moyens de comparaison 15. La variation de la valeur du compteur cadencé 18 est croissante dans le cas où la valeur du RCO détectée et/ou mesurée est supérieure à la valeur de RCO de consigne, et inversement.

Les moyens de calcul 10, et plus particulièrement le compteur cadencé 18, sont en relation avec des moyens générateurs de l'information d'alerte 20, qui sont eux-mêmes en relation avec les moyens de communication 21. Les mises en oeuvre des moyens générateurs de l'information d'alerte 20 et/ou les moyens de communication 21 sont placées sous la dépendance de moyens d'inhibition 22, dont l'activation est provoquée lorsque les contacts électriques frottants 4 usés sont remplacés. Lorsque le compteur cadencé 18 atteint une valeur correspondante à un seuil toléré d'usure des contacts électriques frottants 4, une information d'alerte est générée 23 pour inviter au remplacement 26 des contacts électriques frottants 4. L'activation des moyens d'inhibition 22 est placée sous la dépendance du compteur cadencé 18, de sorte qu'ils soient mis en oeuvre lorsque la valeur du compteur cadencé 18 tend à être nulle. Une telle valeur nulle ne doit pas être comprise au sens strict du terme, cette valeur pouvant être corrigée en fonction des modalités de fonctionnement et/ou de la structure propre du collecteur de courant rotatif. Lorsque les contacts électriques frottants 4 sont dans un état satisfaisant au regard de leur usure, la valeur du compteur cadencé 18 est décrémentée, voire tend à être nulle dans le cas où les contacts électriques frottants 4 sont de qualité excellente. Une telle décrémentation du compteur cadencé 18 vers une valeur sensiblement nulle induit une opération d'activation 24 des moyens d'inhibition, et en conséquence une opération d'inhibition 25 des moyens générateurs de l'information d'alerte 20 et/ou des moyens de communications 21.

## Revendications

1. Procédé de surveillance de l'usure de contacts électriques frottants (4) d'un collecteur de courant rotatif (3) équipant une machine électrique (1) génératrice de ce courant pour véhicule automobile, **caractérisé en ce qu'**il comprend les opérations consistant à :
*) Itérativement à détecter (15) à partir de la machine électrique (1) en phase de génération de courant des données relatives au Rapport Cyclique d'Ouverture (RCO) induit par le courant généré, puis à comparer (15) les données relatives au dit RCO détecté avec au moins un seuil de RCO toléré prédéterminé, et à déduire (16) de la dite comparaison (15) un état d'usure des contacts électriques frottants (4) au regard du seuil de RCO toléré,
*) générer (23) une information d'alerte dans le cas où l'état d'usure des contacts électriques frottants (4) est atteint,
*) inhiber (24,25) l'information d'alerte après remplacement des contacts électriques frottants (4).

2. Procédé selon la revendication 1, **caractérisé en ce que** l'opération de déduction (16) consiste à incrémenter un compteur cadencé (18) sur une période prédéterminée en fonction d'informations issues de l'opération de comparaison (15).

3. Procédé selon la revendication 2, **caractérisé :**
**en ce que** l'opération d'incrémentation du compteur cadencé (18) consiste plus particulièrement à faire varier le compteur cadencé (18) :
*) suivant une valeur croissante dans le cas où ladite comparaison génère une information selon laquelle la valeur du RCO détectée est supérieure à ladite valeur du seuil de RCO toléré,
*) suivant une valeur décroissante dans le cas où ladite comparaison génère une information selon laquelle la valeur du RCO détectée est inférieure à ladite valeur du seuil de RCO toléré, et
**en ce que** l'opération de génération (23) de ladite information d'alerte est provoquée à partir d'une comparaison entre la valeur d'incrémentation du compteur cadencé (18) et une valeur d'incrémentation de consigne prédéterminée.

4. Procédé selon l'une quelconque des revendications 2 et 3, **caractérisé en ce qu'**au moins l'opération d'incrémentation du compteur cadencé (18) est interrompue en l'absence de génération d'un courant par la machine électrique (1).

5. Procédé selon l'une quelconque des revendications 2 à 4, **caractérisé en ce que** l'opération d'inhibition (25) de ladite information d'alerte est provoquée à partir d'une incrémentation du compteur cadencé (18) à une valeur nulle induite par la dite comparaison (15) entre la valeur du RCO détecté et la valeur du seuil de RCO toléré.

6. Procédé selon l'une quelconque des revendications 1 à 4, **caractérisé en ce que** l'opération d'inhibition (25) de ladite information d'alerte est indifféremment provoquée à partir d'une mesure du courant généré par la machine électrique (1) ou à partir d'une opération de validation volontaire par un opérateur.

7. Dispositif générateur d'un courant électrique pour véhicule automobile comprenant une machine électrique (1) génératrice de ce courant, un collecteur de courant (3) équipé de contacts électriques frottants (4), et des moyens de surveillance (8) de l'usure des dits contacts électriques frottants (4), le dit dispositif étant apte à mettre en oeuvre un procédé selon l'une quelconque des revendications précédentes, **caractérisé en ce que** lesdits moyens de surveillance (8) comprennent :
*) des moyens de détection (9) du fonctionnement de la machine électrique (1) en mode de génération de courant,
*) des moyens de détection et/ou de mesure (11) de données relatives au RCO induit par le courant généré par la machine électrique (1),
*) des moyens de calcul (10) associant des moyens de comparaison (12) entre les dites données détectées et des données de consigne prédéterminées stockées dans des moyens de mémoire (13), avec des moyens de déduction (17) d'un état d'usure des contacts électriques frottants (4) au-delà d'un seuil d'usure toléré,
*) des moyens générateurs (20) d'une dite information d'alerte associés à des moyens de communication (21) de l'information d'alerte générée,
*) des moyens d'inhibition (22) des dits moyens générateurs (20) de l'information d'alerte, voire aussi des dits moyens de communication (21).

8. Dispositif selon la revendication 7, **caractérisé en ce que** les moyens de calcul (10) comprennent un dit compteur cadencé (18) associé à des moyens de variation (19) de son incrémentation, dont la mise en oeuvre est placée sous la dépendance des dits moyens de comparaison (12).

9. Dispositif selon la revendication 8, **caractérisé en ce que** la mise en oeuvre des dits moyens d'inhibition (22) est placée sous la dépendance du compteur cadencé (18).

10. Dispositif selon l'une quelconque des revendications 7 à 9, **caractérisé en ce que** les moyens de communication (21) de l'information d'alerte sont indifféremment des moyens visuels intégrés à un tableau de bord d'un véhicule équipé du dispositif et/ou des moyens électroniques intégrés dans un module électronique de gestion de panne que comprend un ordinateur de bord de ce véhicule.

## Patentansprüche

1. Verfahren zur Überwachung des Verschleißes elektrischer Gleitkontakte (4) eines rotierenden Gleichrichters (3), der eine elektrische Maschine (1) ausrüstet, die diesen Strom für ein Kraftfahrzeug erzeugt, **dadurch gekennzeichnet, dass** es die Vorgänge aufweist, die aus Folgendem bestehen:
*) iterativ Erfassen (15) ausgehend von der elektrischen Maschine (1) in Stromerzeugungsphase der Daten in Zusammenhang mit dem zyklischen Öffnungsverhältnis (RCO), das von dem erzeugten Strom induziert wird, dann Vergleichen (15) der Daten in Zusammenhang mit dem erfassten RCO mit mindestens einem tolerierten, vorbestimmten RCO-Schwellenwert, und Ableiten (16) aus dem Vergleich (15) eines Verschleißzustands der elektrischen Gleitkontakte (4) angesichts des tolerierten RCO-Schwellenwerts,
*) Erzeugen (23) einer Warninformation in dem Fall, in dem der Verschleißzustand der elektrischen Gleitkontakte (4) erreicht ist,
*) Unterbinden (24, 25) der Warninformation nach dem Ersetzen der elektrischen Gleitkontakte (4).

2. Verfahren nach Anspruch 1, **dadurch gekennzeichnet, dass** der Ableitungsvorgang (16) darin besteht, einen getakteten Zähler (18) auf einer vorbestimmten Zeitspanne in Abhängigkeit von Informationen, die aus dem Vergleichsvorgang (15) hervorgehen, zu erhöhen.

3. Verfahren nach Anspruch 2, **dadurch gekennzeichnet:**
**dass** der Erhöhungsvorgang des getakteten Zählers (18) insbesondere darin besteht, den getakteten Zähler (18) variieren zu lassen:
*) gemäß einem zunehmenden Wert in dem Fall, in dem der Vergleich eine Information erzeugt, gemäß welcher der Wert des erfassten RCO größer ist als Wert der tolerierte RCO-Schwelle,
*) gemäß einem abnehmenden Wert in dem Fall, in dem der Vergleich eine Information erzeugt, gemäß welcher der Wert des erfassten RCO kleiner ist als der Wert der tolerierten RCO-Schwelle, und
**dass** der Erzeugungsvorgang (23) der Warninformation ausgehend von einem Vergleich zwischen dem Erhöhungswert des getakteten Zählers (18) und einem vorbestimmten Erhöhungssollwert ausgelöst wird.

4. Verfahren nach einem der Ansprüche 2 und 3, **dadurch gekennzeichnet, dass** mindestens der Erhöhungsvorgang des getakteten Zählers (18) bei Fehlen von Erzeugen eines Stroms durch die elektrische Maschine (1) unterbrochen wird.

5. Verfahren nach einem der Ansprüche 2 bis 4, **dadurch gekennzeichnet, dass** der Unterbindungsvorgang (25) der Warninformation ausgehend von einer Erhöhung des getakteten Zählers (18) auf einen Wert null, der durch den Vergleich (15) zwischen dem erfassten Wert des RCO und dem Wert der tolerierten RCO-Schwelle induziert wird, ausgelöst wird.

6. Verfahren nach einem der Ansprüche 1 bis 4, **dadurch gekennzeichnet, dass** der Unterbindungsvorgang (25) der Warninformation unterschiedslos ausgehend von einer Messung des von der elektrischen Maschine (1) erzeugten Stroms oder von einem absichtlichen Bestätigungsvorgang durch einen Bediener ausgelöst wird.

7. Erzeugungsvorrichtung eines elektrischen Stroms für Kraftfahrzeug, die eine elektrische Maschine (1), die diesen Strom erzeugt, einen Gleichrichter (3), der mit elektrischen Gleitkontakten (4) ausgerüstet ist, und Überwachungsmittel (8) des Verschleißes der elektrischen Gleitkontakte (4) aufweist, wobei die Vorrichtung geeignet ist, um ein Verfahren nach einem der vorhergehenden Ansprüche umzusetzen, **dadurch gekennzeichnet, dass** die Überwachungsmittel (8) Folgendes aufweisen:
*) Mittel (9) zum Erfassen des Funktionierens der elektrischen Maschine (1) im Stromerzeugungsmodus,
*) Mittel zum Erfassen und/oder Messen (11) von Daten in Zusammenhang mit dem RCO, der von dem von der elektrischen Maschine (1) erzeugten Strom induziert wird,
*) Berechnungsmittel (10), die Mittel (12) zum Vergleichen zwischen den erfassten Daten und den vorbestimmten Solldaten, die in Speichermitteln (13) gespeichert sind, mit Mitteln (17) zum Ableiten eines Verschleißzustands der elektrischen Gleitkontakte (4) über einen tolerierten Verschleißschwellenwert hinaus verbinden,
*) Mittel (20) zum Erzeugen einer Warninformation, die mit Mitteln (21) zum Kommunizieren der erzeugten Warninformation verbunden sind,
*) Unterbindungsmittel (22) der Mittel (20) zum Erzeugen der Warninformation, ja sogar der Kommunikationsmittel (21).

8. Vorrichtung nach Anspruch 7, **dadurch gekennzeichnet, dass** die Berechnungsmittel (10) einen getakteten Zähler (18) aufweisen, der mit Mitteln (19) zum Variieren seines Erhöhens verbunden ist, deren Umsetzung von den Vergleichsmitteln (12) abhängt.

9. Vorrichtung nach Anspruch 8, **dadurch gekennzeichnet, dass** das Umsetzen der Unterbindungsmittel (22) von dem getakteten Zähler (18) abhängt.

10. Vorrichtung nach einem der Ansprüche 7 bis 9, **dadurch gekennzeichnet, dass** die Mittel (21) zur Kommunikation der Warninformation unterschiedslos visuelle Mittel sind, die in ein Armaturenbrett eines Fahrzeugs, das mit der Vorrichtung ausgestattet ist, eingebaut sind, und/oder elektronische Mittel sind, die in ein elektronisches Pannenverwaltungsmodul, das ein Bordrechner dieses Fahrzeugs aufweist, eingebaut sind.

## Claims

1. A method for monitoring the wear of sliding electrical contacts (4) of a rotating commutator (3) equipping an electrical machine (1) that generates current for a motor vehicle, **characterized in that** it includes the operations consisting of:
*) iteratively detecting (15), using the electrical machine (1) in the current generation phase, data relating to the opening duty cycle (ODC) induced by the generated current, then comparing (15) the data relating to the said detected ODC with at least one predefined tolerated ODC threshold, and deducing (16) from the said comparison (15) a state of wear of the sliding electrical contacts (4) with respect to the tolerated ODC threshold,
*) generating (23) a warning when the state of wear of the sliding electrical contacts (4) is reached,
*) suppressing (24, 25) the warning after replacement of the sliding electrical contacts (4) .

2. The method according to claim 1, **characterized in that** the deduction operation (16) consists of incrementing a regulated counter (18) over a predefined period as a function of information originating from the comparison operation (15).

3. The method according to claim 2, **characterized:**
**in that** the incrementation operation of the regulated counter (18) consists more particularly of varying the regulated counter (18):
*) according to an increasing value in the case where the said comparison generates information according to which the value of the detected ODC is greater than the said tolerated ODC threshold value,
*) according to a decreasing value in the case where the said comparison generates information according to which the value of the detected ODC is less than the said tolerated ODC threshold value, and
**in that** the generation operation (23) of the said warning is instigated from a comparison between the incrementation value of the regulated counter (18) and a predefined setpoint incrementation value.

4. The method according to any one of claims 2 and 3, **characterized in that** at least the incrementation operation of the regulated counter (18) is interrupted in the absence of generation of a current by the electrical machine (1).

5. The method according to any one of claims 2 to 4, **characterized in that** the suppression operation (25) of the said warning is instigated from an incrementation of the regulated counter (18) to a zero value induced by the said comparison (15) between the value of the detected ODC and the tolerated ODC threshold value.

6. The method according to any one of claims 1 to 4, **characterized in that** the suppression operation (25) of the said warning is instigated equally from a measurement of the current generated by the electrical machine (1) or from a voluntary validation operation by an operator.

7. A generating device of an electric current for a motor vehicle including an electrical machine (1) generating this current, a commutator (3) equipped with sliding electrical contacts (4), and monitoring means (8) of the wear of the said sliding electrical contacts (4), the said device being able to implement a method according to any one of the preceding claims, **characterized in that** the said monitoring means (8) include:
*) detection means (9) of the functioning of the electrical machine (1) in current generation mode,
*) detection and/or measuring means (11) of data relating to the ODC induced by the current generated by the electrical machine (1),
*) calculation means (10) associating comparison means (12) between the said detected data and predefined setpoint data stored in memory means (13), with deduction means (17) of a state of wear of the sliding electrical contacts (4) beyond a tolerated wear threshold,
*) generating means (20) of a said warning associated with communication means (21) of the generated warning,
*) suppressing means (22) of the said generating means (20) of the warning, even also of the said communication means (21).

8. The device according to claim 7, **characterized in that** the calculation means (10) include a said regulated counter (18) associated with variation means (19) of its incrementation, the implementation of which is placed under dependence of the said comparison means (12).

9. The device according to claim 8, **characterized in that** the implementation of the said suppressing means (22) is placed under dependence of the regulated counter (18).

10. The device according to any one of claims 7 to 9, **characterized in that** the communication means (21) of the warning are equally visual means integrated with a dashboard of a vehicle equipped with the device and/or electronic means integrated in an electronic breakdown management module included by an on-board computer of this vehicle.
